# EUROPÄISCHE PATENTSCHRIFT

(11) **EP 3 648 442 B1**
(45) Veröffentlichungstag und Bekanntmachung des Hinweises auf die Patenterteilung: **24.03.2021**
(21) Anmeldenummer: 17915975.1
(22) Anmeldetag: 27.07.2017
(51) Int. Cl.: H04M 1/725, G06F 1/16, G06F 3/01, G06F 3/03

(54) **VERFAHREN ZUR RÜCKKEHR ZU EINEM STANDARDDESKTOP UND SYSTEM DAFÜR**
METHOD FOR RETURNING TO DEFAULT DESKTOP AND SYSTEM THEREOF
PROCÉDÉ DE RETOUR À UN BUREAU PAR DÉFAUT ET SYSTÈME ASSOCIÉ

(30) Priorität: 27.06.2017 CN 201710506582
(43) Veröffentlichungstag der Anmeldung: 06.05.2020
(73) Patentinhaber: Huizhou University, Huizhou, Guangdong 516007 (CN)
(72) Erfinder: CAI, Zhaoquan, Huizhou Guangdong 516007 (CN); HU, Song, Huizhou Guangdong 516007 (CN); HU, Hui, Huizhou Guangdong 516007 (CN); CAI, Yingxue, Huizhou Guangdong 516007 (CN); CHEN, Jia, Huizhou Guangdong 516007 (CN)
(74) Vertreter: Huang, Liwei
(86) Internationale Anmeldenummer: PCT/CN2017/094214
(87) Internationale Veröffentlichungsnummer: WO 2019/000528

(56) Entgegenhaltungen:
- EP-A1- 3 062 493
- WO-A1-2014/106680
- CN-A- 102 833 416
- CN-A- 103 259 926
- CN-A- 103 631 522
- CN-A- 103 780 742
- CN-A- 104 063 136
- CN-A- 106 453 870
- US-A1- 2011 273 378
- US-B1- 8 416 148

## Beschreibung

### GEBIET DER OFFENBARUNG

Die vorliegende Offenbarung gehört zu dem Bereich der Smartphones und betrifft insbesondere ein Verfahren zur Rückkehr zum Standard-Startbildschirm und ein zugehöriges System.

### STAND DER TECHNIK

Im Stand der Technik haben Benutzer, die mit der Verwendung von Smartphones nicht vertraut sind, insbesondere diejenigen, die seit langem Mobiltelefone mit lediglich einer Anruf- und einer SMS-Funktion verwenden, oft Schwierigkeiten, Smartphones zu verwenden und sich daran zu gewöhnen. Bestefhende Smartphones verfügen über ein breites Spektrum an Funktionen und zahlreiche mobile Anwendungen stehen zur Verfügung. Wenn solche Benutzer bei Verwendung den Standard-Startbildschirm nicht finden können, werden sie dann leicht ängstlich, wodurch ihre weitere Bedienung der Smartphones beeinträchtigt und selbst Verlust privater Information oder Vermögensschaden infolge einer Fehlbedienung verursacht wird.

Die US 8416148B1 beschreibt dass die tragbare Vorrichtung 10 eine Drehung oder eine Bewegung erfassen kann und eine solche Drehung oder Bewegung als einen Auslöser für Entsperren erkennen kann.

Die WO 2014106680A1 offenbart eine Vorrichtung, wobei der erste Orientierungssensor eine erste Kamera umfasst und der zweite Orientierungssensor eine zweite Kamera umfasst.

### OFFENBARUNG DER ERFINDUNG

Zur Lösung der Aufgabe der vorliegenden Erfindung dient ein Verfahren gemäß Anspruch 1. Vorteilhafte Ausführungsformen ergeben sich aus seinen abhängigen Ansprüchen.

Die vorliegende Erfindung bietet auch ein System gemäß Anspruch 5 an. Vorteilhafte Ausführungsformen ergeben sich aus seinen abhängigen Ansprüchen.

Ein Verfahren zur Rückkehr zum Standard-Startbildschirm die folgenden Schritte umfasst:
- S100, Erkennen mittels einer vorderen und einer hinteren Kamera eines Smartphones, ob das Smartphone auf eine Unterlage gelegt und um mindestens 360 Grad umgedreht wird,
- S200, Öffnen des Standard-Startbildschirms unmittelbar beim Entsperren des Bildschirms von einem Benutzer, wenn dies der Fall ist.

Des Weiteren wird ein System zur Rückkehr zum Standard-Startbildschirm offenbart, das Folgendes umfasst:
- eine Erkennungseinheit, die zum Erkennen mittels einer vorderen und einer hinteren Kamera eines Smartphones dient, ob das Smartphone auf eine Unterlage gelegt und um mindestens 360 Grad umgedreht wird,
- eine Ausführungseinheit, die zum Öffnen des Standard-Startbildschirms unmittelbar beim Entsperren des Bildschirms von einem Benutzer dient, wenn gemäß der Feststellung durch die Erkennungseinheit dies der Fall ist.

Mit der vorstehenden Ausgestaltung werden bei der vorliegenden Offenbarung ein benutzerfreundliches Verfahren zum Erleichtern der Verwendung eines Smartphones für Benutzer, die mit Smartphones nicht vertraut sind, und ein zugehöriges System verwirklicht.

### KURZE BESCHREIBUNG DER ZEICHNUNGEN

Darin zeigen
FIG 1 eine schematische Darstellung eines Verfahrens nach einem Ausführungsbeispiel der vorliegenden Offenbarung,
FIG 2 eine schematische Darstellung eines Systems nach einem Ausführungsbeispiel der vorliegenden Offenbarung.

### KONKRETE AUSFÜHRUNGSFORMEN

Zum besseren Verständnis der bei der vorliegenden Offenbarung offenbarten Ausgestaltung für Fachleute auf diesem Gebiet werden nachfolgend Ausgestaltungen einzelner Ausführungsbeispiele anhand der Ausführungsbeispiele und der beiliegenden Zeichnungen erläutert, wobei die beschriebenen Ausführungsbeispiele lediglich einen Teil der Ausführungsbeispiele anstatt sämtlicher Ausführungsbeispiele der Offenbarung darstellen. Die Begriffe "erste", "zweite", usw., die in der vorliegenden Offenbarung verwendet werden, dienen zur Unterscheidung verschiedener Gegenstände, anstatt zur Beschreibung einer bestimmten Reihenfolge zu dienen. Des Weiteren zielen die Begriffe "umfassen", "aufweisen" und ihre Varianten auf eine nicht exklusive Einbeziehung ab. Ein Vorgang, ein Verfahren, ein System, ein Produkt oder eine Anlage, der, das oder die beispielsweise eine Reihe von Schritten oder Einheiten umfasst, wird nicht auf die aufgeführten Schritte oder Einheiten beschränkt und umfasst vielmehr optional auch andere Schritte oder Einheiten, die nicht angegeben werden oder über die solcher Vorgang, solches Verfahren, Produkt oder solche Anlage selbst verfügt.

Bei dem Begriff "Ausführungsbeispiel", der hierbei erwähnt wird, ist darauf hinzuweisen, dass bestimmte Merkmale, Strukturen oder Eigenschaften, die anhand solcher Ausführungsbeispiele beschrieben werden, in mindestens einem Ausführungsbeispiel der vorliegenden Offenbarung umfasst sein können. Der Begriff, der an unterschiedenen Stellen der Beschreibung auftaucht, weist nicht unbedingt auf ein und dasselbe Ausführungsbeispiel hin. Darunter ist auch nicht ein unabhängiges oder alternatives Ausführungsbeispiel, das anderen Ausführungsbeispielen widerspricht, zu verstehen. Es versteht sich für Fachleute auf diesem Gebiet, dass sich die hierbei beschriebenen Ausführungsbeispiele mit anderen Ausführungsbeispielen kombinieren lassen.

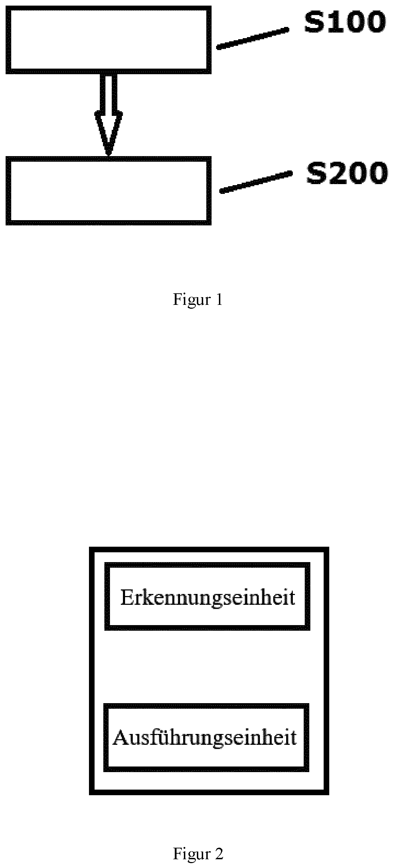

Wie sich aus FIG 1 ergibt, umfasst ein Verfahren zur Rückkehr zum Standard-Startbildschirm die folgenden Schritte:
- S100, Erkennen mittels einer vorderen und einer hinteren Kamera eines Smartphones, ob das Smartphone auf eine Unterlage gelegt und um mindestens 360 Grad umgedreht wird,
- S200, Öffnen des Standard-Startbildschirms unmittelbar beim Entsperren des Bildschirms von einem Benutzer, wenn dies der Fall ist.

Bei dem vorliegenden Ausführungsbeispiel richtet sich die vorliegende Offenbarung an Benutzer, die mit der Verwendung von Smartphones nicht vertraut sind, insbesondere diejenigen, die seit langem Mobiltelefone mit lediglich einer Anruf- und einer SMS-Funktion verwenden. Bestehende Smartphones verfügen über ein breites Spektrum an Funktionen und zahlreiche mobile Anwendungen stehen zur Verfügung. Wenn solche Benutzer bei Verwendung den Standard-Startbildschirm nicht finden können, werden sie dann leicht ängstlich, wodurch ihre weitere Bedienung der Smartphones beeinträchtigt und selbst Verlust privater Information oder Vermögensschaden infolge einer Fehlbedienung verursacht wird.

Bei dem vorstehenden Ausführungsbeispiel wird geschickt mittels der vorderen und der hinteren Kamera erkannt, ob das Smartphone auf eine Unterlage gelegt und um mindestens 360 Grad umgedreht wird, so dass bei Umdrehung um mindestens 360 Grad allein durch Entsperren des Bildschirms von dem Benutzer (beispielsweise indem vorzugsweise über eine Einschalttaste der Bildschirm aktiviert wird. Selbstverständlich sind andere komplizierte Entsperrungsmöglichkeiten denkbar, die jedoch für die Benutzer in diesem Zusammenhang nicht geeignet sind) sich unmittelbar der Standard-Startbildschirm öffnet.

Mit anderen Worten kann der Benutzer, wenn er nicht weißt, wie er zum Standard-Startbildschirm zurückkehren kann, allein durch Legen des Smartphones auf eine Unterlage und Umdrehen um mindestens 360 Grad unmittelbar den Standard-Startbildschirm beim Entsperren öffnen. Dies sorgt für eine komfortable Bedienung für Benutzer mit unzureichender Lernfähigkeit.

In einem anderen Ausführungsbeispiel umfasst es nach Ausführen des Schritts S200 ferner den folgenden Schritt:
- S301, Zurücksetzen des Klingeltons des Smartphones auf die normale Lautstärke.

Das vorliegende Ausführungsbeispiel zielt darauf ab, eine normale Lautstärke des Klingeltons des Smartphones für Benutzer, die mit der Bedienung der Smartphones nicht vertraut sind und sich nicht daran gewöhnen, sicherzustellen. Somit wird das Verpassen eines Anrufs aufgrund im Vibrations- oder Lautlosmodus befindlichen Klingeltons infolge einer Fehlbedienung der Benutzer vermieden. Insbesondere bei Benutzern mit Hörschwächen ist das vorliegende Ausführungsbeispiel zweckmäßig.

In einem anderen Ausführungsbeispiel umfasst der Schritt S100 die folgenden Unterschritte:
- S101, Aktivieren der vorderen und der hinteren Kamera beim Erkennen einer Umdrehung des Smartphones von der Vorderseite auf die Rückseite oder von der Rückseite auf die Vorderseite und Steuern der vorderen und der hinteren Kamera derart, dass nach einem vorbestimmten Intervall je ein aufgenommenes Foto erfasst wird,
- S102, Feststellen, ob die durch die vordere Kamera und die hintere Kamera aufgenommenen Fotos zwei Fotos mit einer ähnlichen Szene umfassen.

Bei dem vorstehenden Ausführungsbeispiel wird die Feststellung einer Umdrehung eines Smartphones um 360 Grad mittels einer vorderen und einer hinteren Kamera beispielhaft erläutert.

Zum Erkennen, dass das Smartphone einmal umgedreht wird, stehen zahlreiche Möglichkeiten zur Verfügung und hierbei wird auf eine ausführliche Auflistung verzichtet. Stattdessen werden lediglich mehrere herkömmliche Möglichkeiten beispielhaft genannt: Erfassen eines dreidimensionalen Beschleunigungswerts mittels u.a. eines Schwerkraftsensors oder eines Richtungssensors. Obwohl nach Erkennung einer Umdrehung weiter mittels u.a. eines Schwerkraftsensors oder eines Richtungssensors erkannt werden kann, ob anschließend eine weitere Umdrehung erfolgt, wird bei der vorliegenden Offenbarung nicht ein derartiges Verfahren weiter eingesetzt. Aufgrund des beschränkten Anwendungsumfangs einer derartigen Umdrehungs-Erkennungsmöglichkeit mittels u.a. Eines Schwerkraftsensors oder eines Richtungssensors erfolgt bei der vorliegenden Offenbarung zum Erhöhen der universalen Anwendbarkeit und der Genauigkeit eine weitere Feststellung mittels der vorderen und der hinteren Kamera, wie aus der folgenden Beschreibung zu entnehmen ist.

Bei dem vorliegenden Ausführungsbeispiel werden die vordere und die hintere Kamera nach Erkennen einer Umdrehung sofort aktiviert und derart gesteuert, dass nach einem vorbestimmten Intervall (beispielsweise 100 ms, 50 ms oder eine längere oder kürzere vorbestimmte Zeit) je ein aufgenommenes Foto erfasst wird. Es versteht sich, dass beim Aufnehmen vorzugsweise kein Verschlusston abgegeben wird.

Dann werden alle durch die vordere Kamera aufgenommenen Fotos einer ersten Gruppe mit allen durch die hintere Kamera aufgenommenen Foto einer zweiten Gruppe, um festzustellen, ob ein Foto der ersten Gruppe und ein anderes Foto der zweiten Gruppe eine ähnliche Szene aufweisen.

Beispielsweise bei nicht transparenter Unterlage in einem typischen Fall werden die vordere und die hintere Kamera sofort aktiviert, wenn der Benutzer das Smartphone einmal umgedreht (also um 180 Grad umgedreht) hat, in welchem Fall die vordere und die hintere Kamera sofort ein Foto aufnehmen. Unabhängig davon, ob die vordere oder die hintere Kamera der Unterlage zugewandt ist, soll eine Kamera ein nahezu dunkles oder völlig dunkles Foto aufnehmen. Wenn das Smartphone weiter um mindestens 180 Grad umgedreht wird, wird dann die andere Kamera mit der Umdrehung sicherlich der Unterlage zugewandt ausgerichtet, so dass ein nahezu dunkles oder völlig dunkles Foto aufgenommen wird. Somit umfasst die durch die vordere Kamera aufgenommenen Fotos der ersten Gruppe sicherlich ein Foto, das eine ähnliche Szene, also eine nahezu dunkle oder völlig dunkle Szene wie bei einem anderen Foto aus den durch die hintere Kamera aufgenommenen Fotos der zweiten Gruppe aufweist.

Bei transparenter Unterlage in einem besonderen Fall sind sowohl die vordere als auch die hintere Kamera jeweils zu einem Zeitpunkt beim Umdrehen um 360 Grad der Unterlage zugewandt, so dass beim Aufnahmen zu einer vorbestimmten Zeit sowohl die vordere als auch die hintere Kamera die Unterlage fotografieren können. Daher liegen Fotos mit derselben Szene vor. Wenn eine weitere Umdrehung um 180 Grad (insgesamt um 540 Grad umgedreht) erfolgt, umfasst die Gruppe durch die vordere Kamera aufgenommener Fotos dann zwei Fotos mit einer ähnlichen Szene. Dies gilt auch für die Gruppe durch die hintere Kamera aufgenommener Fotos. Somit kann anhand der Fotos mit einer ähnlichen Szene aus zwei Gruppen von Fotos festgestellt werden, dass eine Umdrehung um mindestens 360 Grad erfolgt. Es ist darauf hinzuweisen, dass neben Fotografieren der Unterlage die der Unterlage abgewandte Szene ebenfalls dementsprechend durch die vordere und die hintere Kamera abwechselnd fotografiert werden können. Auf diese Weise kann auch durch Vergleichen festgestellt werden, ob Fotos mit einer ähnlichen Szene vorliegen. Des Weiteren können neben Fotografieren der Unterlage und der der Unterlage abgewandten Szene ferner die beiden Seiten einer senkrecht zu der Unterlage verlaufenden Achse zu der vorbestimmten Zeit fotografiert werden. Solche Fotos können ebenfalls zum Feststellen, ob eine ähnliche Szene vorliegt und eine Umdrehung um mindestens 360 Grad erfolgt, verwendet werden. Offensichtlich unterliegt ein derartiges Fotografierverfahren keiner Einschränkung durch den Neigungswinkel der Unterlage relativ zu der horizontalen Ebene. Es versteht sich, dass zum Feststellen, ob zwei Fotos eine ähnliche Szene umfassen, im Stand der Technik zahlreiche Ausgestaltungen zur Verfügen stehen, die unmittelbar oder nach einfacher Modifikation für die vorliegende Offenbarung verwendet werden können. Bei der vorliegenden Offenbarung wird auch nicht erstrebt, eine neue Ausgestaltung zum Feststellen, ob zwei Fotos eine ähnliche Szene umfassen, vorzuschlagen. Daher wird auf eine ausführliche Erläuterung einer derartigen Ausgestaltung verzichtet.

Anhand der vorstehenden Ausführungsbeispiele versteht sich, dass die Ausgestaltung nach der vorliegenden Offenbarung, bei der anhand der vorderen und der hinteren Kamera eine Umdrehung um mindestens 360 Grad festgestellt wird, offensichtlich eine höhere Genauigkeit und einen größeren Anwendungsbereich gegenüber der Ausgestaltung unter Verwendung von u.a. Einem Schwerkraftsensor oder einem Richtungssensor aufweist und keiner Einschränkung u.a. durch das Magnetfeld, den Neigungswinkel der Unterlage relativ zu der horizontalen Ebene und durch Holpern unterliegt. Beim Holpern muss allein eine Bildstabilisierungs- oder Anti-Shake-Behandlung des aufgenommenen Fotos erfolgen. Des Weiteren geht aus den vorstehenden Ausführungsbeispielen hervor, aus welchem Grund eine Umdrehung um mindestens 360 Grad erfolgen soll: Die erste Umdrehung um 180 Grad dient zum Aktivieren der vorderen und der hinteren Kamera. Die zweite Umdrehung um 180 Grad dient zum Feststellen, ob die durch die vordere und die hintere Kamera aufgenommenen Fotos eine ähnliche Szene umfassen. Bei dritter Umdrehung um 180 Grad kann eine weitere Suche nach Fotos mit einer ähnlichen Szene aus der Gruppe durch die vordere oder die hintere Kamera aufgenommener Fotos erfolgen. Ferner können nach Ausführen des Schritts S200 die durch die vordere und die hintere Kamera aufgenommenen Fotos gelöscht werden.

Ferner kann der Schritt S200 vorzugsweise über eine XML-Datei oder eine JSON-Datei oder ein anderes Skript in dem Betriebssystem des Smartphones ausgeführt werden. Nach Ausführen des Schritts S100 greift das Betriebssystem auf eine Datei oder ein Skript, die oder das in einem zugehörigen Pfad gespeichert ist, zu und führt des darin enthaltenen Befehls aus, um somit den Schritt S200 auszuführen.

In einem anderen Ausführungsbeispiel wird nach Ausführen des Schritts S200 ferner der folgende Schritt ausgeführt:
- S302, Beenden aller im Hintergrund laufenden Anwendungen.

Es versteht sich, dass die Benutzererfahrung verbessert und ein reibungsloser Betrieb des Smartphones sichergestellt werden kann, indem bei zu vielen im Hintergrund des Smartphones laufenden Programmen oder selbst bei einer Fehlbedienung des Benutzers, insbesondere wenn das Smartphone langsam läuft und der Benutzer sich verwirrt fühlt, nach Öffnen des Standard-Startbildschirms alle im Hintergrund laufenden Anwendung beendet werden.

Noch bevorzugterweise wird ein Neustart des Smartphones automatisch eingeleitet, wenn das Betriebssystem des Smartphone feststellt, dass das Smartphone abgestürzt ist. Dies ist zweckmäßiger für Benutzer, die mit Smartphones nicht vertraut sind, da sie wahrscheinlich nicht weißen, wie sie beim Absturz vorgehen sollen.

In einem anderen Ausführungsbeispiel wird nach Ausführen des Schritts S200 ferner der folgende Schritt ausgeführt:
- S303, Zurücksetzen des Netzwerksignals des Smartphones, welches Netzwerksignal ein Kommunikationssignal und ein Datensignal umfasst.

Im Gegensatz zu dem vorstehenden Ausführungsbeispiel, das sich an langsamen Betrieb und Absturz eines Smartphones richtet, zielt das vorliegende Ausführungsbeispiel darauf ab, durch schnelle Rücksetzung des Netzwerksignals das Problem zu lösen, dass bei schlechtem Kommunikations-Signalempfang oder beim Entkoppeln (beispielsweise Entkoppeln von dem GSM-Netzwerk, dem CDMA-Netzwerk oder dem 4G-Kommunikationsnetzwerk) oder bei schlechtem Daten-Signalempfang (beispielsweise bei unabsichtlichem Ausschalten der mobilen Daten- oder Wi-Fi-Funktion oder bei unabsichtlichem Wechseln in den Flugmodus von einem Benutzer) der Benutzer sich verwirrt fühlt und nicht weiß, wie er vorgeht. Es versteht sich, dass zum Bewältigen der vorstehenden Verwendungsschwierigkeit für Benutzer die Rücksetzung bei der vorliegenden Offenbarung automatisch erfolgt.

Dabei umfasst das Rücksetzen des Kommunikationssignals des Smartphones Deaktivieren der SIM-Karte und erneutes Aktivieren der SIM-Karte oder unmittelbares Neustarten des SIM-Kartenmoduls in dem Smartphone, ohne darauf beschränkt zu sein.

Das Rücksetzen des Datensignals des Smartphones umfasst Ausschalten der mobilen Datenfunktion und Einschalten der mobilen Datenfunktion oder unmittelbares Neustarten des mobilen Datenmoduls in dem Smartphone; oder alternativ dazu Aktivieren des Flugmodus und Deaktivieren des Flugmodus, ohne darauf beschränkt zu sein.

Es versteht sich, dass das Rücksetzen durch Ausführen eines Rücksetzbefehls über eines Skripts erfolgen kann, wobei der Befehl unmittelbar nach Ausführen sofort in Kraft treten kann.

Bei den vorstehenden Ausführungsbeispielen kann nach Rücksetzen entsprechender Einstellung der Benutzer über die erfolgte Rücksetzung des entsprechenden Signals oder der entsprechenden Funktion informiert werden. Alternativ dazu kann je nach konkretem Bedarf kein Hinweis geliefert werden.

In einem anderen Ausführungsbeispiel wird nach Ausführen des Schritts S200 ferner der folgende Schritt ausgeführt:
- S304, Versetzen der Schrift des Smartphones in einen Großschriftmodus.

Es versteht sich, dass das vorliegende Ausführungsbeispiel sich an Benutzer richtet, die ihre Augen schützen möchten.

Der Privatsphäre und der Vermögenssicherheit halber kann zudem das Sicherheitsmodul zurückgesetzt werden, was Folgendes umfasst, jedoch ohne darauf beschränkt zu sein: Verbinden mit einem eingebetteten URL oder einer eingebetteten IP-Adresse eines Servers, automatisches Herunterladen und Installieren, Aktivieren der neusten Version der Sicherheitssoftware und Durchführen einer vollständigen Systemprüfung.

Analog zu dem vorstehenden Verfahren offenbart ein anderes Ausführungsbeispiel ein System zur Rückkehr zum Standard-Startbildschirm, das, wie aus FIG 2 zu entnehmen ist, Folgendes umfasst:
- eine Erkennungseinheit, die zum Erkennen mittels einer vorderen und einer hinteren Kamera eines Smartphones dient, ob das Smartphone auf eine Unterlage gelegt und um mindestens 360 Grad umgedreht wird,
- eine Ausführungseinheit, die zum Öffnen des Standard-Startbildschirms unmittelbar beim Entsperren des Bildschirms von einem Benutzer dient, wenn gemäß der Feststellung durch die Erkennungseinheit dies der Fall ist.

Unter Bezugnahme auf die vorstehenden Verfahrens-Ausführungsbeispiele versteht sich, dass die hier beschriebenen Ausführungsbeispiele für das System anhand konkreter Funktionseinheiten die entsprechende Ausgestaltung auf Systemebene offenbaren.

Analog dazu umfasst es in einem anderen Ausführungsbeispiel ferner Folgendes:
- eine Klingelton-Rücksetzeinheit, die zum Zurücksetzen des Klingeltons des Smartphones auf die normale Lautstärke dient.

Analog dazu umfasst die Erkennungseinheit in einem anderen Ausführungsbeispiel ferner Folgendes:
- eine Erkennungseinheit erster Umdrehung, die zum Aktivieren der vorderen und der hinteren Kamera beim Erkennen einer Umdrehung des Smartphones von der Vorderseite auf die Rückseite oder von der Rückseite auf die Vorderseite und zum Steuern der vorderen und der hinteren Kamera derart dient, dass nach einem vorbestimmten Intervall je ein aufgenommenes Foto erfasst wird,
- eine Feststellungseinheit zweiter Umdrehung, die zum Feststellen dient, ob die durch die vordere Kamera und die hintere Kamera aufgenommenen Fotos zwei Fotos mit einer ähnlichen Szene umfassen.

Analog dazu umfasst das System in einem anderen Ausführungsbeispiel ferner Folgendes:
- eine Hintergrund-Steuerungseinheit, die zum Beenden aller im Hintergrund laufenden Anwendungen dient.

Analog dazu umfasst das System in einem anderen Ausführungsbeispiel ferner Folgendes:
- eine Netzwerksignal-Rücksetzeinheit, die zum Zurücksetzen des Netzwerksignals des Smartphones dient, welches Netzwerksignal ein Kommunikationssignal und ein Datensignal umfasst.

Analog dazu umfasst das System in einem anderen Ausführungsbeispiel ferner Folgendes:
- eine Schrift-Rücksetzeinheit, die zum Versetzen der Schrift des Smartphones in einen Großschriftmodus dient.

Die Schritte in dem Verfahren nach den Ausführungsbeispielen der vorliegenden Offenbarung lassen sich je nach tatsächlichem Bedarf hinsichtlich ihre Reihenfolge einstellen, miteinander kombinieren und auslassen.

Die Einheiten in dem System nach den Ausführungsbeispielen der vorliegenden Offenbarung lassen sich je nach tatsächlichem Bedarf miteinander kombinieren, unterteilen und auslassen. Es ist darauf hinzuweisen, dass die vorstehenden Verfahrens-Ausführungsbeispiele zum Vereinfachen der Beschreibung als eine Reihe von Vorgängen erläutert. Jedoch versteht sich für Fachleute auf diesem Gebiet, dass die vorliegende Erfindung keineswegs durch die beschriebene Reihenfolge der Vorgänge eingeschränkt wird, da gemäß der vorliegenden Erfindung einige Schritte in einer anderen Reihenfolge oder gleichzeitig erfolgen können. Des Weiteren soll es sich für Fachleute auf diesem Gebiet verstehen, dass die in der Beschreibung erläuterten Ausführungsbeispiele zu bevorzugten Ausführungsbeispielen gehören und die zugehörigen Vorgängen, Module und Einheiten nicht unbedingt für die vorliegende Erfindung benötigt werden.

Bei den vorstehenden Ausführungsbeispielen werden einzelne Ausführungsbeispiele mit unterschiedlichen Schwerpunkten beschrieben. Für Teile, die in einem bestimmten Ausführungsbeispiel nicht ausführlich erläutert werden, kann Bezug auf betroffene Beschreibung anderer Ausführungsbeispiele genommen werden.

Es versteht sich, dass das in den Ausführungsbeispielen der vorliegenden Offenbarung bereitgestellten System auf andere Weise verwirklicht werden kann. Beispielsweise sind die vorstehenden System-Ausführungsbeispiele lediglich schematisch beschrieben. Beispielsweise die Unterteilung der Einheiten erfolgt lediglich nach ihren logischen Funktionen. Bei praktischer Verwirklichung kann die Unterteilung auf andere Weise erfolgen. Beispielsweise lassen sich mehrere Einheiten oder Baugruppen miteinander kombinieren oder in ein anderes System integrieren. Zudem können einige Merkmale entfallen oder müssen nicht ausgeführt werden. Des Weiteren kann es sich bei einer Kopplung oder eine unmittelbare Kupplungs- oder Kommunikationsverbindung zwischen einzelnen Einheiten oder Baugruppen um eine mittelbare Kupplungs- und Kommunikationsverbindung oder einer elektrische oder eine andere Verbindung über einige Schnittstellen, Einrichtungen oder Einheiten handeln.

Einheiten, die als separate Teile beschrieben werden, können aber müssen nicht physikalisch getrennt sein. Sowohl eine Anordnung an einer Stelle als auch eine Verteilung an mehreren Netzwerkeinheiten sind denkbar. Je nach tatsächlichem Bedarf können einige oder sämtliche Einheiten davon zum Verwirklichen der Aufgabe der Ausgestaltung der Ausführungsbeispiele ausgewählt werden.

Darüber hinaus können einzelne Funktionseinheiten bei den Ausführungsbeispielen der Offenbarung in eine Verarbeitungseinheit integriert werden oder alternativ dazu physikalisch separat vorliegen oder je zu zweit oder mehr in eine Einheit integriert werden. Die integrierten Einheiten lassen sich sowohl hardwareseitig als auch als Software-Funktionseinheiten verwirklichen.

Wenn die integrierten Einheiten als Software-Funktionseinheiten verwirklicht und als separates Produkt vertrieben oder verwendet werden, können sie in einem computerlesbaren Speichermedium gespeichert sein. Somit kann die Ausgestaltung der vorliegenden Offenbarung im Wesentlichen oder teilweise oder im Ganzen oder ihr zum Stand der Technik beitragender Teil in Form von Softwareprodukt vorliegen. Das Computer-Softwareprodukt ist in einem Speichermedium gespeichert und umfasst mehrere Befehle zum Ermöglichen der Ausführung aller oder einiger der Schritte des Verfahrens nach einzelnen Ausführungsbeispielen der vorliegenden Offenbarung durch einen Computer (beispielsweise Smartphone, PDA, tragbares Gerät, Laptop oder Tablet). Bei dem Speichermedium kann es sich u.a. um eine U-Disk, einen Festwertspeicher (ROM, Read-Only Memory), einen Arbeitsspeicher (RAM, Random Access Memory), eine mobile Festplatte, eine Diskette, eine optische Disk oder ein anderes Medium handeln, in dem Programmcode gespeichert werden kann.

Die obigen Ausführungsbeispiele dienen nur zur Veranschaulichung der Ausgestaltung der vorliegenden Offenbarung und gelten keineswegs als einschränkend. Obwohl die vorliegende Offenbarung unter Bezugnahme auf die vorstehenden Ausführungsformen ausführlich beschrieben wurde, versteht sich für Fachleute auf diesem Gebiet, dass verschiedene Modifikationen an den in den vorhergehenden Ausführungsbeispielen beschriebenen Ausgestaltungen oder gleichwertige Ersetzungen einiger der Merkmale möglich sind.

## Patentansprüche

1. Verfahren zur Rückkehr zum Standard-Startbildschirm von einem Smartphone, umfassend die folgenden Schritte:
- S100, Erkennen mittels einer vorderen und einer hinteren Kamera eines Smartphones, ob das Smartphone auf eine Unterlage gelegt und um mindestens 360 Grad umgedreht wird, worin der Schritt S100 die folgenden Unterschritte umfasst:
- Erkennung einer Umdrehung des Smartphones mittels eines Schwerkraftsensors oder eines Richtungssensors,
- nach Erkennen einer Umdrehung des Smartphones werden die vordere und die hintere Kamera sofort aktiviert und derart gesteuert, dass nach einem vorbestimmten Intervall je ein aufgenommenes Foto erfasst wird,
- Feststellen, ob die durch die vordere Kamera und die hintere Kamera aufgenommenen Fotos zwei Fotos mit einer ahnlichen Szene umfassen;
- S200, Öffnen des Standard-Startbildschirms unmittelbar beim Entsperren des Bildschirms von einem Benutzer, wenn dies der Fall ist;
- S302, Beenden aller im Hintergrund laufenden Anwendungen nach Ausführen des Schritts S200.

2. Verfahren nach Anspruch 1, umfassend ferner den folgenden Schritt:
- S301, Zurücksetzen des Klingeltons des Smartphones auf die normale Lautstärke.

3. Verfahren nach Anspruch 1, umfassend ferner den folgenden Schritt:
- S303, Zurücksetzen des Netzwerksignals des Smartphones, welches Netzwerksignal ein Kommunikationssignal und ein Datensignal umfasst.

4. Verfahren nach Anspruch 1, umfassend ferner den folgenden Schritt:
- S304, Versetzen der Schrift des Smartphones in einen Großschriftmodus.

5. System von einem Smartphone zur Rückkehr zum Standard-Startbildschirm, wobei das System so konfiguriert ist, dass es die Schritte des Verfahrens nach Anspruch 1 ausführt, und das System Folgendes umfasst:
- eine Erkennungseinheit, die zum Erkennen mittels einer vorderen und einer hinteren Kamera eines Smartphones dient, ob das Smartphone auf eine Unterlage gelegt und um mindestens 360 Grad umgedreht wird,
- eine Erkennungseinheit, die zum Erkennen mittels eines Schwerkraftsensors oder eines Richtungssensors des Smartphones dient, ob das Smartphone umgedreht wird,
- eine Ausführungseinheit, die zum Öffnen des Standard-Startbildschirms unmittelbar beim Entsperren des Bildschirms von einem Benutzer dient, wenn gemäß der Feststellung durch die Erkennungseinheit dies der Fall ist;
- eine Hintergrund-Steuerungseinheit, die zum Beenden aller im Hintergrund laufenden Anwendungen dient.

6. System nach Anspruch 5, umfassend ferner Folgendes:
- eine Klingelton-Rücksetzeinheit, die zum Zurücksetzen des Klingeltons des Smartphones auf die normale Lautstärke dient.

7. System nach Anspruch 5, wobei die Erkennungseinheit Folgendes umfasst:
- eine Erkennungseinheit erster Umdrehung, die zum Aktivieren der vorderen und der hinteren Kamera beim Erkennen einer Umdrehung des Smartphones von der Vorderseite auf die Rückseite oder von der Rückseite auf die Vorderseite und zum Steuern der vorderen und der hinteren Kamera derart dient, dass nach einem vorbestimmten Intervall je ein aufgenommenes Foto erfasst wird,
- eine Feststellungseinheit zweiter Umdrehung, die zum Feststellen dient, ob die durch die vordere Kamera und die hintere Kamera aufgenommenen Fotos zwei Fotos mit einer ähnlichen Szene umfassen.

8. System nach Anspruch 5, umfassend ferner Folgendes:
- eine Netzwerksignal-Rücksetzeinheit, die zum Zurücksetzen des Netzwerksignals des Smartphones dient, welches Netzwerksignal ein Kommunikationssignal und ein Datensignal umfasst.

9. System nach Anspruch 5, umfassend ferner Folgendes:
- eine Schrift-Rücksetzeinheit, die zum Versetzen der Schrift des Smartphones in einen Großschriftmodus dient.

## Claims

1. Method for returning to a standard start screen of a smartphone, comprising the following steps:
- S100, detecting by way of a front and a rear camera of a smartphone whether the smartphone is placed on a surface and turned over by at least 360 degrees, wherein the step S100 comprises the following sub steps:
- detecting a rotation of the smartphone by way of a gravity sensor or a direction sensor,
- after detecting a rotation of the smartphone, activating immediately and controlling the front and rear cameras in such a way that a photo is captured after a predetermined interval,
- determining whether the photos captured by the front camera and the rear camera include two photos with a similar scene,
- S200, opening the standard start screen immediately when the screen is unlocked by a user, if this is the case,
- S302, ending all applications running in the background after carrying out the step S200.

2. The method according to claim 1, further comprising the following step:
- S301, resetting the ringtone of the smartphone to the normal volume.

3. The method according to claim 1, further comprising the following step:
- S303, resetting the network signal of the smartphone, which network signal comprises a communication signal and a data signal.

4. The method according to claim 1, further comprising the following step:
- S304, setting the font of the smartphone in a large font mode.

5. A system of a smartphone to return to the standard start screen, wherein the system is configured to carry out the steps of the method according to claim 1 and the system comprises the following:
- a detection unit, which is used to detect, by way of a front and a rear camera of a smartphone, whether the smartphone is placed on a surface and rotated by at least 360 degrees,
- a detection unit, which is used to detect whether the smartphone is turned over by way of a gravity sensor or a direction sensor on the smartphone,
- an execution unit, which is used to open the standard start screen immediately when the screen is unlocked by a user if this is the case according to the determination by the detection unit,
- a background control unit, which is used to terminate all applications running in the background.

6. The system according to claim 5, further comprising the following:
- a ringtone resetting unit, which is used to reset the ringtone of the smartphone to the normal volume.

7. The system according to claim 5, wherein the detection unit comprises:
- a detection unit of the first rotation, which is used to activate the front and rear cameras when detecting a rotation of the smartphone from the front to the rear or from the rear to the front and to control the front and the rear camera in such a way that after a predetermined interval one photo captured is recorded,
- a determination unit of the second rotation, which is used to determine whether the photos captured by the front camera and the rear camera include two photos with a similar scene.

8. The system according to claim 5, further comprising the following:
- a network signal resetting unit, which is used to reset the network signal of the smartphone, which network signal comprises a communication signal and a data signal.

9. The system according to claim 5, further comprising the following:
- a font resetting unit, which is used to set the font of the smartphone in a large font mode.

## Revendications

1. Procédé pour revenir à l'écran de démarrage standard d'un téléphone intelligent, comprenant les étapes suivantes :
- S100, détecter qu'un téléphone intelligent se trouve sur une surface et est retourné d'au moins 360 degrés par l'intermédiaire des caméras avant et arrière du téléphone intelligent, dans lequel l'étape S100 comprend les sous-étapes suivantes :
- détecter une rotation du téléphone intelligent par l'intermédiaire d'un capteur de gravité ou d'un capteur de direction,
- activer et commander caméras avant et arrière immédiatement une fois la rotation du téléphone intelligent détectée, et commander de manière à ce qu'une photo soit prise dans un intervalle prévu,
- déterminer si les photos prises par les caméras avant et arrière comprennent deux photos représentant une scène similaire,
- S200, ouvrir l'écran de démarrage standard immédiatement une fois l'écran déverrouillé par un utilisateur, en tel cas,
- S302, arrêter toutes applications fonctionnant en arrière-plan une fois l'étape S200 exécuté.

2. Procédé selon la revendication 1, comprenant en outre l'étape :
- S301, redéfinir le volume de la sonnerie du téléphone intelligent au niveau normal.

3. Procédé selon la revendication 1, comprenant en outre l'étape :
- S303, redéfinir le signal réseau du téléphone intelligent, le signal réseau comprenant un signal de communication et un signal de données.

4. Procédé selon la revendication 1, comprenant en outre l'étape :
- S304, définir la police du téléphone intelligent en mode de grande police.

5. Système de téléphone intelligent pour revenir à l'écran de démarrage standard, qui est configuré pour exécuter les étapes du procédé selon la revendication 1 et comprend :
- une unité de détection, qui est configurée pour détecter qu'un téléphone intelligent se trouve sur une surface et est retourné d'au moins 360 degrés par l'intermédiaire des caméras avant et arrière du téléphone intelligent,
- une unité de détection, qui est configurée pour détecter une rotation du téléphone intelligent par l'intermédiaire d'un capteur de gravité ou d'un capteur de direction du téléphone intelligent,
- une unité d'exécution, qui est configurée pour ouvrir l'écran de démarrage standard immédiatement une fois l'écran déverrouillé par un utilisateur en cas correspondant à la détermination par l'unité de détection,
- une unité de commande de l'arrière-plan, qui est configurée pour arrêter toutes applications fonctionnant en arrière-plan.

6. Système selon la revendication 5, comprenant en outre l'étape suivant :
- une unité de redéfinition de la sonnerie, qui est configurée pour redéfinir le volume de la sonnerie du téléphone intelligent au niveau normal.

7. Système selon la revendication 5, dans lequel l'unité de détection comprend :
- une unité de détection d'une première rotation, qui est configurée pour activer les caméras avant et arrière une fois une rotation d'avant en arrière ou d'arrière en avant du téléphone intelligent détectée, et commander les caméras avant et arrière de manière à ce qu'une photo soit prise dans un intervalle prévu,
- une unité de détermination d'une deuxième rotation, qui est configurée pour déterminer si les photos prises par les caméras avant et arrière comprennent deux photos représentant une scène similaire.

8. Système selon la revendication 5, comprenant en outre l'étape suivant :
- une unité de redéfinition du signal réseau, qui est configurée pour redéfinir le signal réseau du téléphone intelligent, le signal réseau comprenant un signal de communication et un signal de données.

9. Système selon la revendication 5, comprenant en outre l'étape suivant :
- une unité de redéfinition de la police, qui est configurée pour définir la police du téléphone intelligent en mode de grande police.
